# EUROPEAN PATENT APPLICATION

(11) **EP 4 664 309 A1**
(43) Date of publication of application: **17.12.2025**
(21) Application number: 25181670.8
(22) Date of filing: 10.06.2025
(51) Int. Cl.: G06F 16/174

(54) **SYSTEMS AND METHODS FOR STORING A DATAFILE**

(30) Priority: 10.06.2024 US 202418738572
(71) Applicant: DASSAULT SYSTEMES AMERICAS CORP., Waltham, MA 02451 (US)
(72) Inventor: Chandler, Christopher, Fort Collins, 80525 (US)
(74) Representative: Bandpay & Greuter

(57) **Abstract**

Embodiments store a datafile. One such embodiment partitions a datafile into chunks. A data structure is constructed that represents the datafile. The data structure includes a hierarchical tree representing the chunks. In turn, respective chunk identifiers (IDs) are generated that correspond to the chunks. Next, non-duplicate chunk(s) are identified from among the chunks based on the generated respective chunk IDs. Based on the constructed data structure and the identified non-duplicate chunk(s), datapack(s) are constructed. The constructed datapack(s) are then stored in memory.

## Description

### BACKGROUND

Conventional systems for storing, organizing, and/or transferring data may be slow and inefficient, and may have inferior performance.

### SUMMARY

One common technical problem in existing computer systems that store, organize, and/or transfer data, *e.g.,* a revision control system (RCS, also referred to herein interchangeably as a version control system or VCS), is how to reduce an amount of data that needs to be transferred and/or stored. For instance, when using a cloud-based server, *e.g.,* a cloud-based RCS, a problem arises of minimizing an amount of data transferred to and/or stored on the cloud-based server. Generally, a smaller amount of data will be faster to transfer and cheaper to store on the cloud.

As a nonlimiting example, in a conventional RCS, there can be a significant amount of duplicate data. For instance, one can check in, *i.e.,* store, a 1GB (gigabyte) file and then check in a slightly modified new version of the same file. If complete versions of both files are stored, then this may consume 2GB in total, but a majority of the second gigabyte may be duplicate data. This is just one type of data duplication that can occur. Because data may be stored on a cloud-based system, e.g., a cloud-based RCS, it may be necessary to reduce other different types of duplicated data as well, so as to save as much storage, *e.g.,* disk-based storage, as possible. In the case of a cloud-based system, it may also be desirable to reduce an amount of data that needs to be transferred to and/or from the cloud-based system. Taking up again the nonlimiting example of an RCS, solutions may also be needed that improve checkout runtime and that do not depend on a number of versions *(i.e.,* deltas) of a file.

In addition, the ability may be needed to speed up transfers of large files (*e.g.,* transfer the files in parallel) and not have to retransfer an entire file when an in-progress transfer fails and part of the file was already successfully transferred.

Embodiments address the foregoing and other problems in existing systems by providing unique methods and systems for storing content of datafiles (e.g., binary or text files) within a computer system, *e*.*g*., a RCS, so as to reduce an amount of duplicate data. Furthermore, embodiments can be leveraged in industries such as semiconductors, as well as any other technology field, *e.g.,* the software industry, where computer systems for storing, organizing, and/or transferring data are used.

In an embodiment, a file checked into a RCS may be partitioned into small chunks via a natural chunking algorithm using a rolling hash or other suitable hash function known to those of skill in the art. These chunks may then be grouped into "datapacks" and indexed via their SHA-256 checksums; other suitable known checksum functions may also be used. The "datapacks" may be transferred and stored on a cloud-based system, or, alternately in local storage. The "datapacks" may contain one or more chunks, which can make up part of a large file or which can be a combination of chunks from a lot of small files. Grouping chunks into "datapacks," instead of storing each chunk as a separate file, may resolve performance issues with transferring lots of small files to or from a cloud-based object store, such as Amazon^{®} S3 among other examples.

According to another embodiment, chunks may be indexed by their associated SHA-256 checksums; other suitable known checksum functions may also be used. This may allow embodiments to check for duplicates-which is one example benefit of embodiments-as well as look up and fetch necessary chunks to reconstruct a file during checkout. Moreover, in an embodiment, checksums may be used to detect other phenomena as well, such as corrupted data in a file or malicious activity, *e.g.,* file tampering.

In yet another embodiment, a list of chunks that make up a file may be stored as a hierarchical tree, which may be referred to as a "chunk partition hierarchy tree," instead of a flat list. This may allow embodiments to store just changes to a "chunk partition hierarchy tree" for newer versions of a file, instead of storing a complete list of chunks per version of the file. This may reduce an amount of duplicate data, *e*.*g*., metadata, as well.

An embodiment may include the following novel components, for nonlimiting example:
a) Using natural chunking in a computer system, *e*.*g*., a RCS;
b) Indexing chunks for lookup and duplicate detection;
c) Storing a list of chunks that make up a file as a "chunk partition hierarchy tree" instead of a flat list; and
d) Combining and structuring chunks into "datapacks" to transfer to and store on, *e.g.,* a cloud-based system, or alternatively on local storage.

The above nonlimiting example components individually or in combination may allow embodiments to: (i) significantly reduce an amount of storage required by a computer system, *e*.*g*., a RCS, (ii) reduce an amount of time it takes to transfer data to and from a cloud-based system, and (iii) provide fault tolerance for potential data transmission errors.

An example embodiment is directed to a computer-implemented method for storing a datafile. To begin, the method partitions a datafile into a plurality of chunks. The method then constructs a data structure representing the datafile. The data structure includes a hierarchical tree representing the plurality of chunks. In turn, the method generates respective chunk identifiers (IDs) corresponding to the plurality of chunks. The method identifies non-duplicate chunk(s) from among the plurality of chunks based on the generated respective chunk IDs. Identifying the non-duplicate chunk(s) may include performing a deduplication process with respect to the plurality of chunks. Based on the constructed data structure and the identified non-duplicate chunk(s), the method constructs datapack(s). The method then stores the constructed datapack(s) in memory, which may be, for instance, disk-based storage, temporary storage such as RAM, etc., remote storage such as cloud storage, or a database, among other examples.

In an embodiment, constructing the data structure includes generating nodes representing the plurality of chunks and generating the hierarchical tree by iteratively partitioning the generated nodes until a condition is met. According to one such embodiment, the iteratively partitioning is based on a criterion. In another embodiment, at least one of the condition and the criterion is based on user input. Further, according to yet another to an embodiment, at least one of the condition and the criterion may be pre-specified

In another embodiment, the condition includes a first number of nodes at a first level of the hierarchical tree not being less than a second number of nodes at a second level of the hierarchical tree. According to one such embodiment, the first level is higher than the second level in a hierarchical order of the hierarchical tree. Further, in yet another embodiment, the criterion is based on a target average number of child nodes for a given parent node of the plurality of nodes. According to an embodiment, the criterion is based at least in part on a given node ID for a given node of the nodes. In one such embodiment, the given node ID is calculated based upon chunk ID(s) associated with the given node. According to another embodiment, the criterion is based on node IDs of a next level of the hierarchical tree. If the next level is a leaf level *(i.e.,* nodes at the leaf level are chunks), then the criterion is based on chunk IDs of the chunks at the leaf level. If the next level is an intermediate level, then the criterion is based on node IDs of nodes at the intermediate level. In one such embodiment, the nodes IDs are SHA-256 hash values of the nodes' respective contents; other suitable known hash functions may also be used. A node's content, according to an embodiment, is a list of IDs (*e.g.,* SHA-256 hash values) of its child node(s).

According to an embodiment, the datafile is a first datafile and the hierarchical tree is a first hierarchical tree. In one such embodiment, identifying the non-duplicate chunk(s) includes comparing the first hierarchical tree with a second hierarchical tree associated with a second datafile.

In another embodiment, partitioning the datafile into the plurality of chunks includes partitioning the datafile into the chunks based on at least one of a Rabin-Karp function and a FastCDC function. According to one such embodiment, FastCDC may be an optimized and high-performance approach for content-defined chunking.

Further, in yet another embodiment, partitioning the datafile into the plurality of chunks includes partitioning the datafile into the chunks based on a target chunk size. According to an embodiment, the target chunk size is based on user input. In another embodiment, the target chunk size may be pre-specified.

According to an embodiment, generating the respective chunk IDs includes generating the respective chunk IDs using a SHA-256 function.

In another embodiment, identifying the non-duplicate chunk(s) includes querying a data repository index to identify unique chunk ID(s) corresponding to the non-duplicate chunk(s). According to an embodiment, chunk ID matching and/or node ID matching may be performed. If node IDs (which can include IDs of root nodes) match, then duplicate branches are present between two hierarchical trees. If two chunk IDs match, then duplicate leaves are present between two hierarchical trees. Such chunk ID and/or node ID matching may be employed in embodiments to identify non-duplicate chunk(s).

In yet another embodiment, the method further includes generating a metadata segment corresponding to a given datapack of the constructed datapack(s). According to one such embodiment, the metadata segment includes information regarding content of the given datapack. For instance, in an embodiment, a metadata segment may include a table with entries, where an entry may include, *e.g.,* an ID of a data item, a type of the item (such as node or chunk), a size of the item, and/or a position of the item in a datapack. According to another embodiment, the method further includes updating a data repository index based on the generated metadata segment.

According to an embodiment, the memory in which the datapack(s) are stored is associated with a cloud-based server. In one such embodiment, the method further includes, prior to the storing, transferring the constructed datapack(s) to the cloud-based server. In another embodiment, the datafile is a newly-versioned file in a revision control system (RCS) and the cloud-based server includes a repository of the RCS. According to one such embodiment, the method further includes performing the transferring as part of committing the newly-versioned file into the repository of the RCS. In yet another embodiment, the method further includes performing the transferring in parallel by instantiating at least two respective transfer threads corresponding to the constructed datapack(s). According to an embodiment, the method further includes, responsive to detecting a failure of a given transfer thread of the instantiated at least two transfer threads, restarting the given transfer thread.

Another example embodiment is directed to a computer-based system for storing a datafile. The system includes a processor and a memory with computer code instructions stored thereon. In such an embodiment, the processor and the memory, with the computer code instructions, are configured to cause the system to implement any embodiments, or combination of embodiments, described herein.

Yet another example embodiment is directed to a non-transitory computer program product for storing a datafile. The computer program product includes a computer-readable medium with computer code instructions stored thereon. The computer code instructions are configured, when executed by a processor, to cause an apparatus associated with the processor to implement any embodiments, or combination of embodiments, described herein.

It is noted that embodiments of the method, system, and computer program product may be configured to implement any embodiments, or combination of embodiments, described herein.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 is a diagram illustrating a process of partitioning a file according to an embodiment.
FIG. 2 is a diagram illustrating a process of generating chunk partition trees according to an embodiment.
FIG. 3 is a diagram illustrating a process of checking in two files with duplicate content according to an embodiment.
FIG. 4 is a diagram illustrating a process of grouping and storing datapack files according to an embodiment.
FIG. 5 is a diagram illustrating a commit or update process using a single datapack file according to an embodiment.
FIG. 6 is a diagram illustrating a process of storing two different files having duplicate content according to an embodiment.
FIG. 7 is a flowchart of a method for storing a datafile according to an embodiment.
FIG. 8 is a schematic view of a computer network in which embodiments may be implemented.
FIG. 9 is a block diagram illustrating an example embodiment of a computer node in the computer network of FIG. 8.

### DETAILED DESCRIPTION

A description of example embodiments follows.

A storage system, *e*.*g*., a revision control system (RCS), potentially stores lots of duplicated data, *e.g.,* due to storing multiple versions of each file. Conventional systems may try to reduce an amount of data stored by storing deltas for each file version. However, there are drawbacks with this delta-based approach. As a number of deltas grows *(i.e.,* a number of revisions of a file grows), it becomes more expensive, performance wise, to reconstruct the file. Moreover, a checkout process may need to walk a delta history to reconstruct a file. This may also have a disadvantage of not accounting for other types of data duplication. For example, two completely unrelated files may also have duplicate data, which issue is not addressed by existing systems.

Embodiments leverage concepts of applying natural chunk partitioning to a file system. A method for natural chunk partitioning that may be used in embodiments is described in A. Muthitacharoen, et al., "A Low-bandwidth Network File System," ACM SIGOPS Operating Systems Review 35(5):174-187 (December 2001), which is herein incorporated by reference in its entirety. Furthermore, embodiments may employ these concepts within, *e*.*g*., a cloud-based server, which functionality is unique compared to existing approaches. As previously mentioned, a RCS may contain lots of duplicated data due to storing multiple versions of each file. As such, data deduplication (removing of duplicated data) functionality implemented by embodiments can reduce storage requirements and/or increase efficiency for these types of systems.

Embodiments may implement numerous novel concepts. For instance, as part of applying the concepts of natural chunk partitioning into a RCS, embodiments may introduce the novel concepts of creating a chunk partition hierarchy tree and grouping chunks into "datapacks" to transfer and store on, *e.g.,* a cloud-based server. Embodiments provide these and other new and innovative concepts, which are discussed in detail hereinbelow, beyond the innovation of leveraging natural chunk partitioning within a RCS.

In an embodiment, a file being checked into a RCS may be partitioned into chunks. According to another embodiment, the chunks may be of a targeted size, *e.g.,* no smaller than 4 kB (kilobyte) per chunk. Further, in yet another embodiment, partitioning may be performed using, *e.g.,* a rolling hash or other suitable hash function known to those of skill in the art. These chunks and/or the partitioning process may be referred to as "natural chunk partitions" or "content defined chunking" because partition criteria may be based on file content. In an embodiment, an actual chunk size may be random, but relatively close to a target size. According to another embodiment, natural chunk partitions can be computed using, *e.g.,* a Rabin-Karp function, a FastCDC function, or any other suitable hash function known in the art.

According to an embodiment, once a file is partitioned into chunk(s), an identifier, *e.g.,* a SHA-256 hash value, may be computed for each chunk for indexing. It should be noted that, according to an embodiment, an identifier, *e.g.,* a hash value, may be unique if the corresponding chunk content is unique. Therefore, in yet another embodiment, whenever a new chunk's hash value matches another chunk's hash value, then both chunks may be identical and the new chunk may be skipped for storing. This feature may allow embodiments to check for and prevent storing duplicate content.

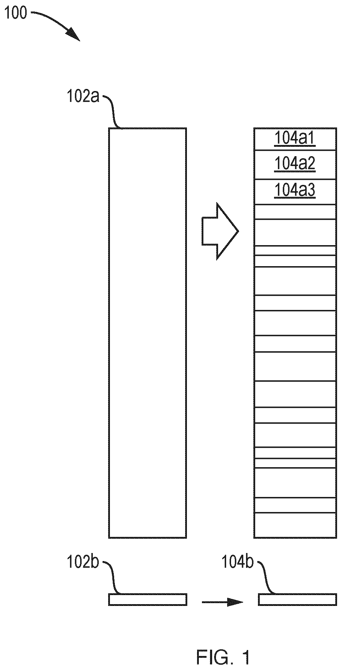

FIG. 1 is a diagram illustrating process 100 of partitioning files 102a and 102b, *e.g.,* files on disk, according to an embodiment. The process 100 partitions the files 102a and 102b into chunks. Partitioning the file 102a results in multiple chunks, including chunks 104a1-104a3, whereas partitioning the file 102b results in a single chunk 104b. A SHA-256 hash value, for instance, may be computed for each chunk, *e.g.,* 104a1-104a3 and 104b, for indexing; other suitable known hash functions may also be used. The size of each chunk, *e.g.,* 104a1-104a3 and 104b, may be random, but on average equal to a target size. A small file, *e.g.,* 102b, may result in only a single chunk, *e.g.,* 104b.

In an embodiment, once a file, *e.g.,* 102a or 102b, is partitioned, a list of chunks, *e.g.,* 104a1-104a3 or 104b, that make up the file may be recorded. Such a list may be used to reconstruct a file. However, instead of a conventional flat list, embodiments may generate and record a hierarchical tree. Such a hierarchical tree may be referred to as a "chunk partition hierarchy tree" and may be a unique approach of embodiments for storing a list. A node of a hierarchical tree, which may be referred to as a "chunk node," may include a list of its corresponding child node(s). According to an embodiment, only leaf nodes of a hierarchical tree may be actual chunks. In another embodiment, a root node of a hierarchical tree may represent a complete file. According to yet another embodiment, a SHA-256 hash value, for instance, may be computed for each node in a tree for indexing, in a similar fashion as for file chunks. Other suitable known hash functions or other such identifier generating methodologies may also be used. Embodiments can check for duplicates of chunk nodes in a similar way as with file chunks.

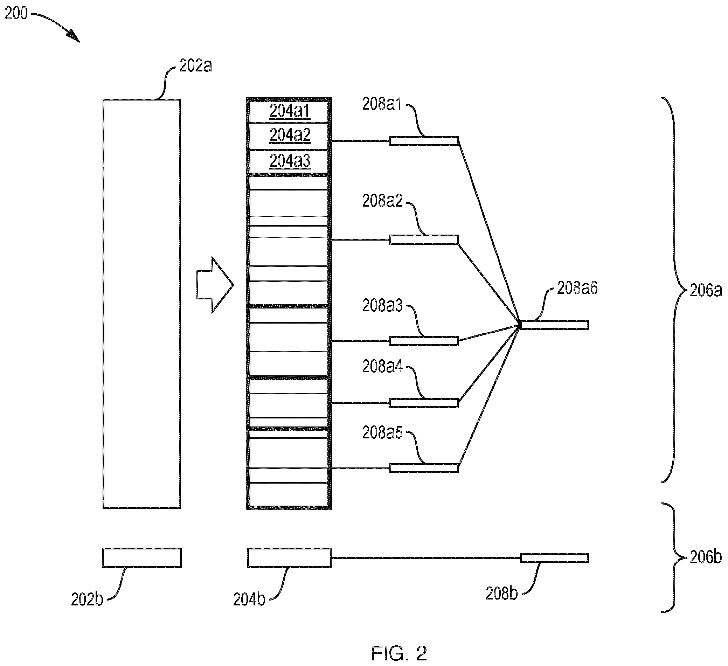

FIG. 2 is a diagram illustrating a process 200 of generating chunk partition trees 206a and 206b according to an embodiment. As shown in FIG. 2, hierarchical trees 206a and 206b correspond to files 202a and 202b, respectively. The hierarchical or chunk partition tree 206a includes multiple nodes 208a1-208a6, where nodes 208a1-208a5 are intermediate nodes and node 208a6 is a root node. Similarly, the hierarchical or chunk partition tree 206b includes node 208b, which is a root node. The file 202b may be a small file, which may result in a tree 206b with only a single node 208b.

The process 200 may generate the hierarchical trees 206a and 206b based on the chunks, *e*.*g*., 204a1-204a3 and 204b of the files 202a and 202b, respectively. For instance, the file 202a may be partitioned, *i.e.,* chunked, so as to generate a plurality of chunks, *e.g.,* 204a1-204a3, among others. In turn, groupings of chunks are each represented by respective nodes 208a1-208a5 in the tree 206a. In a specific example, the chunks 204a1-204a3 are represented by the node 208a1.

According to an embodiment, a non-leaf node in a tree may include a list of child node(s); the child node(s) may either be intermediate node(s) or leaf node(s), the latter of which may be file chunks. For example, referring to FIG. 2, the root node 208a6 of the tree 206a may include a list of intermediate child nodes 208a1-208a5. The intermediate nodes 208a1-208a5 may in turn each include a list referring to leaf node(s). For instance, the intermediate node 208a1 has leaf nodes, which are file chunks 204a1-204a3. Likewise, the root node 208b of the tree 206b may include a list referring to a leaf node, which is the file chunk 204b.

It should be noted that in the example embodiment of FIG. 2, the intermediate nodes 208a1-208a5 list only leaf level file chunks, *e*.*g*., 204a1-204a3, but in other embodiments, intermediate nodes can list other intermediate nodes as well.

Continuing with FIG. 2, according to an embodiment, the process 200 may compute a SHA-256 hash value, for instance, for each node, *e*.ig., 208a1-208a6 and 208b, for indexing; other suitable known hash functions may also be used.

Referring again to FIG. 2, in another embodiment, a number of children per non-leaf node, *e*.*g*., 208a1-208a6 and 208b, may be random, but on average equal to a target size.

One reason for embodiments using a hierarchical tree versus a flat list may be to reduce an amount of data stored for each version of a file. According to an embodiment, only "chunk nodes" that change may need to be stored for a new version of a file. This may cause significant savings on disk space, particularly, if a file is large and there are several versions of the file. Instead of storing a complete list of chunks of a file for every version of the file, which can become quite expensive, embodiments may only store changes, *e.g.,* a list of chunks which are changed.

According to an embodiment, each level of a hierarchical tree, *e.g.,* 206a and 206b, may be computed similarly to how natural chunks are computed for a file. For example, some embodiments may apply a "natural" partitioning of a previous level of a hierarchy. In another embodiment, such partitioning may be repeated until a number of nodes of a next level of hierarchy no longer decreases. Further, in yet another embodiment, to determine where to partition, each child node's SHA-256 hash value, for instance, may be checked against some criteria; other suitable known hash functions may also be used. For example, a valid criteria may be that a child node's SHA-256 value ends in '0' (zero). A chosen criteria may be determined by a targeted or desired average number of child nodes per parent. For example, if a chosen criteria is that a last two digits must equal '00' (double zero) instead of a last digit being equal to '0' (zero), then there may be more children per node on average (in this case, 256 child nodes on average versus 16).

The foregoing procedure may have a property that if two files have matching content, then their corresponding chunk hierarchy trees will also have matching "chunk nodes" up to a point where the files start to differ. Embodiments can check for duplicated nodes in a similar fashion as for duplicate chunks and therefore determine duplicate content spanning across multiple chunks at once, instead of checking each chunk one at a time.

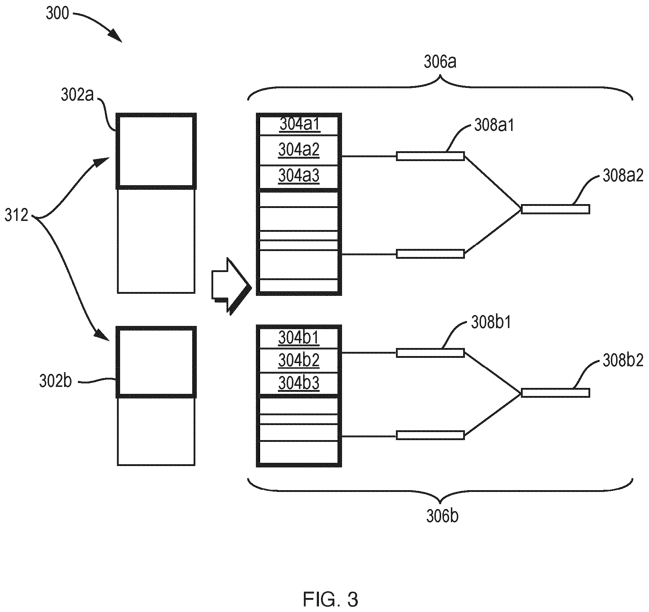

FIG. 3 is a diagram illustrating a process 300 of checking in two files 302a and 302b with duplicate content 312 according to an embodiment. In FIG. 3, each file 302a and 302b is partitioned resulting in respective pluralities of chunks, *e*.*g*., 304a1-304a3 and 304b1-304b3, representing each file. In turn, the respective pluralities of chunks are used to generate the trees 306a and 306b.

As shown in FIG. 3, the duplicate content 312 in both files 302a and 302b results in trees 306a and 306b *(i.e.,* trees corresponding to the files 302a and 302b, respectively) each including an identical set of leaf nodes, which may be file chunks 304a1-304a3 and 304b1-304b3, respectively. Moreover, nodes 308a1 and 308b1 having leaf node children of the file chunks 304a1-304a3 and 304b1-304b3, respectively, may be identical in the sense that the nodes 308a1 and 308b1 may have matching hash values.

According to an embodiment, there may be no need to check two nodes' contents-e.g., their respective child nodes-for differences if the chunk nodes themselves match, *e.g.,* if the two nodes have matching hash values. For instance, referring to FIG. 3, the two nodes 308a1 and 308b1 may have matching hash values and, as such, there may be no need to search for differences in the nodes' contents, *i.e.,* the leaf nodes of the file chunks 304a1-304a3 and 304b1-304b3, respectively.

Continuing with FIG. 3, in another embodiment, a SHA-256 hash value, for instance, of a root node, *e.g.,* 308a2 or 308b2, may also be a hash value of a corresponding file, *e.g.,* 302a or 302b, respectively, on disk; other suitable known hash functions may also be used.

One example benefit to a hierarchy of embodiments versus a flat listing of chunks for a file is to not duplicate information for each listing of each version of the file. This helps make a listing be as small as possible. Another example benefit is that embodiments can check for duplicate data at a hierarchical node level. This allows embodiments to skip over large sections of a file when determining what content changed from one version of the file to another. Otherwise, it may be necessary to check each and every chunk one at a time.

Yet another innovation of embodiments is how chunks and "chunk nodes" are actually transferred to and stored on, *e.g.,* a cloud-based server. It may be too expensive to store chunks as one file per chunk or "chunk node," as this may result in large amounts of extremely tiny files. Also, it may be too expensive, performance wise, to transfer numerous tiny files separately. It may be more efficient to transfer data as one large file versus lots of tiny files. This is a reason why one may create a compressed file of data using, *e.g.,* tar gzip or other known compression tool, and then transfer the compressed file. Embodiments may account for this by grouping chunks and "chunk nodes" together into "datapacks." It is these "datapacks" that may be transferred and stored on a cloud-based server, *e.g.,* a cloud-based RCS, instead of individual chunk and "chunk nodes" separately. Each datapack may be transferred and stored as a file on disk and its filename may be its SHA-256 hash value; other suitable known hash functions may also be used. An example benefit of a datapack of embodiments versus a traditionally compressed file is that once a datapack is created, it never needs to be unpacked.

According to an embodiment, a datapack may be a file that includes one or more chunks or chunk nodes. There may be no restriction on how chunks or chunk nodes are grouped into datapacks. A grouping can be sections of a single large file or span across multiple files. In another embodiment, a datapack may also include a table of contents or metadata segment that lists what chunks and chunk nodes the datapack contains and where. Further, in yet another embodiment, a table of contents may be indexed by an indexer, such as a central indexer. This may be a reason why embodiments do not need to unpack a file. A RCS may be able to determine which datapack contains a specific file chunk and just copy the specific chunk to a destination file during checkout. In an embodiment, an indexer may facilitate identifying duplicate chunks across multiple computer systems, *e*.*g*., multiple RCSes.

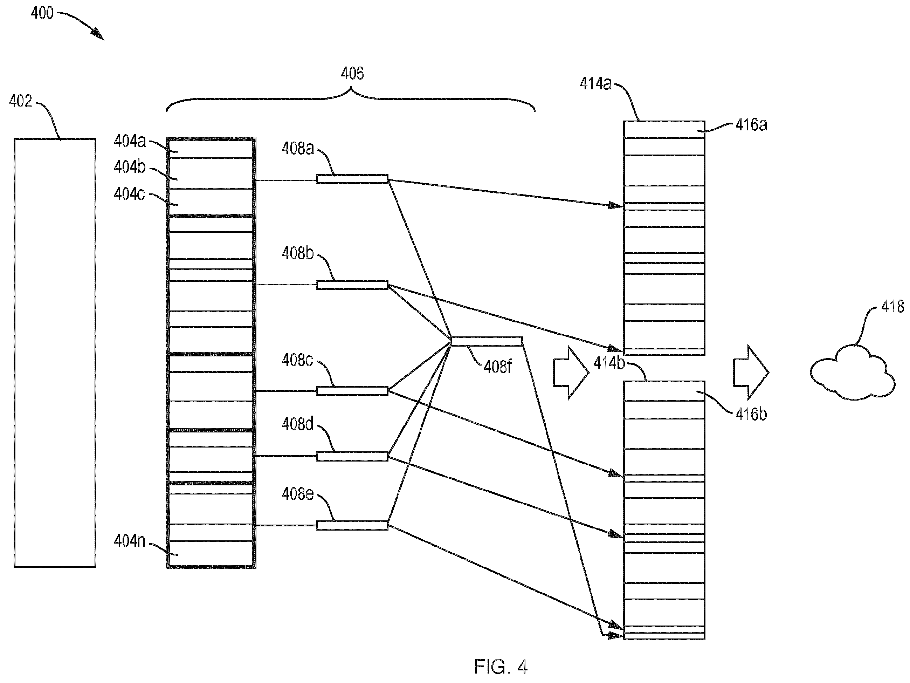

FIG. 4 is a diagram illustrating a process 400 of grouping and storing datapack files 414a and 414b according to an embodiment. In FIG. 4, a plurality of chunks, *e.g.,* 404a-404n of the file 402 are generated. In turn, a hierarchical tree 406, composed of chunks 404an and nodes 408a-408f, is generated and, based on the tree 406, the process 400 generates and stores datapacks 414a and 414b.

As shown in FIG. 4, in an embodiment, chunks 404a-404n of file 402 and chunk nodes 408a-408f are grouped into the datapacks 414a and 414b and the datapacks 414a and 414b are transferred to and stored on (and optionally retrieved from) cloud-based server 418, *e.g.,* a cloud-based RCS, or alternatively stored on (and optionally retrieved from) local storage (not shown) if a cloud-based server is not used. In another embodiment, there may be no restrictions on which data goes into which datapack. For instance, as shown in FIG. 4, the nodes 408a and 408b are assigned to the datapack 414a, while the nodes 408c-408f are assigned to the datapack 414b. According to yet another embodiment, the datapacks 414a and 414b may include tables of contents or metadata segments 416a and 416b, respectively, which may list chunks and chunk nodes within the respective datapacks 414a and 414b.

Continuing with FIG. 4, in an embodiment, for a new commit-for instance, when checking in a new version of file, *e.g.,* 402-new datapacks, *e.g.,* 414a and 414b, are created and sent to a cloud-based server, *e.g.,* 418, or alternatively stored on disk (not shown), with only new or modified content (not shown). If any new content is a duplicate of some other content, including previously committed content, then this new content may not be included in the datapack 414a or 414b. Further, even if the duplication is from an unrelated file (not shown), the new content may not be included in the datapack.

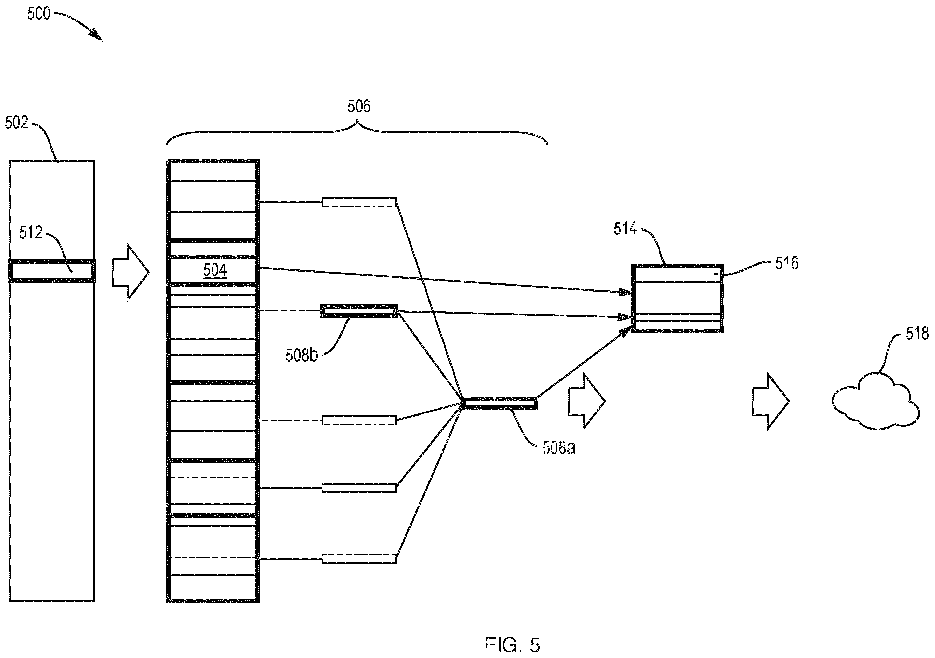

FIG. 5 is a diagram illustrating a commit or update process 500 of a file 502 using a single datapack file 514 according to an embodiment. In the process 500, the file 502 is partitioned into chunks and a tree 506 is generated. In the file 502, only content 512 is new with respect to a previous version of file 502 (previous version not shown). To continue, the resulting tree 506 is compared to trees of data (including a tree of the previous version of file 502) to identify the new content to include in datapack 514. In this example, where just the content 512 is changed, the new data includes root node 508a and its child node 508b having a leaf node of chunk 504, the latter corresponding to the changed content 512. As such, this new content (root node 508a, child node 508b, leaf node of chunk 504) is included in the datapack 514, which is sent to cloud-based server 518, *e.g.,* a cloud-based RCS, or alternatively stored on disk (not shown) when checking in the new version of the file 502.

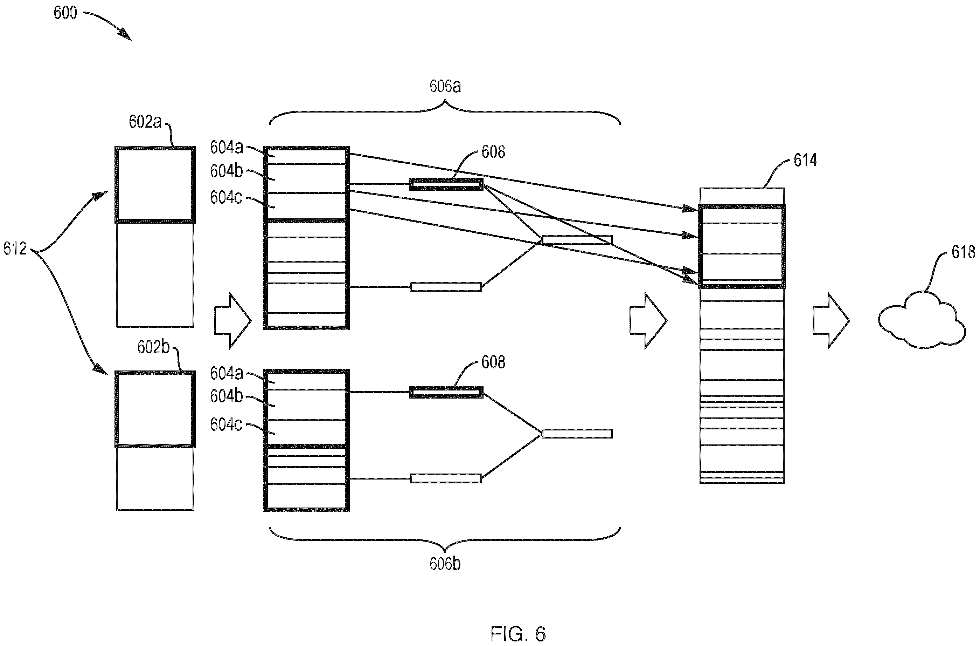

FIG. 6 is a diagram illustrating a process 600 of storing two different files 602a and 602b having duplicate content 612 according to an embodiment. As shown in FIG. 6, in an embodiment, the same content 612 results in chunks 604a-604c being generated for both files 602a and 602b. In turn, trees 606a and 606b corresponding to the respective files 602a and 602b may both include the same intermediate node 608 having leaf nodes of the chunks 604a-604c. Moreover, a resulting datapack 614 may only include unique content and no duplicates. This is depicted in FIG. 6, where only a single instance of the node 608 and the chunks 604a-604c is included in the datapack 614, which reflects the same content for both files 602a and 602b. FIG. 6 illustrates that duplicate content, *e.g.,* 612, even from two completely unrelated files, *e.g.,* 602a and 602b, may only be stored once on a cloud-based server, *e.g.,* 618, or alternatively stored on disk (not shown). Such functionality is unique to systems of embodiments.

An example benefit to a datapack of embodiments is that tiny file partition chunks and chunk nodes can be grouped into a larger file to store on, *e.g.,* a cloud-based server, to improve transfer speeds and reduce a number of files. As mentioned hereinabove, it may be more efficient to transfer a large file versus numerous tiny files. However, this may be true up to a point. For an extremely large file, it may actually be better to break the extremely large file up into smaller pieces and transfer the pieces in parallel. A datapack of embodiments may solve this issue as well. Embodiments may group chunks of an extremely large file into separate datapacks based on, for instance, some targeted size of the datapacks. Then embodiments may transfer these datapacks in parallel. For instance, according to an example embodiment, a target maximum datapack size may be 500 megabytes (MB). Thus, in another example embodiment, if a file exceeds a target maximum size of 500MB and a resulting datapack would also be greater than 500MB, then the file may be broken up into multiple datapacks. Other target maximum datapack and/or file sizes are also suitable. For the sake of clarity, it is noted that a file exceeding a target maximum size of, *e.g.,* 500MB, may still result in a datapack of less than 500MB due to duplicate content in the file. Put another way, according to an example embodiment, criteria for breaking a resulting datapack into sub-datapacks may be based on datapack size, not an original file size. In another example embodiment, when a datapack greater than, *e.g.,* 500MB, is broken into sub-datapacks, the sub-datapacks may be kept at roughly a same size. For instance, according to yet another example embodiment, if a file's datapack is, *e.g.,* 501MB, then the datapack may be broken up into two sub-datapacks of roughly, *e.g.,* 250.5 MB each-not one sub-datapack of 500MB and another sub-datapack of 1MB.

In addition, datapacks of embodiments may allow for optimizing a data transfer by controlling a size of files and a number of files that are transferred to, *e.g.,* a cloud-based server. Moreover, embodiments may allow for transferring datapacks in parallel, while unpacking may be unnecessary. Embodiments can also start a transfer at a moment a first datapack is constructed to minimize a cost of building datapacks. For instance, embodiments can start transferring datapacks once an initial part of an extremely large file has been processed.

According to an embodiment, in a computer system such as a RCS, a file can be rolled back or reverted to an older committed or checked-in version of the file. For a given commit a user makes, there may be an associated hash value created and stored for that commit. This may serve as an ID of the commit. In addition to this, the RCS may store metadata (which may include a chunk hierarchy tree) for a given commit so the system can determine how to reconstruct files and folders that make up the commit. If a user wants to revert to an older version of a file, the user may provide a specific commit's hash value (*i.e.,* its ID) to roll back to. The user can get his commit hash value by asking the RCS for a commit history of the file. This commit history may include a hash value of each commit in which the file was modified, along with a timestamp and user provided message for that commit. The order of the commit history may be from most recent commit to oldest commit. An embodiment may store metadata that explains how to reconstruct a file of a specific commit as a tree instead of a flat list to minimize an amount of information that is stored for each commit. Further, an embodiment may only need to capture which chunks changed from a previous commit of the file, instead of a complete list of chunks every time.

### Exemplary Method Embodiment

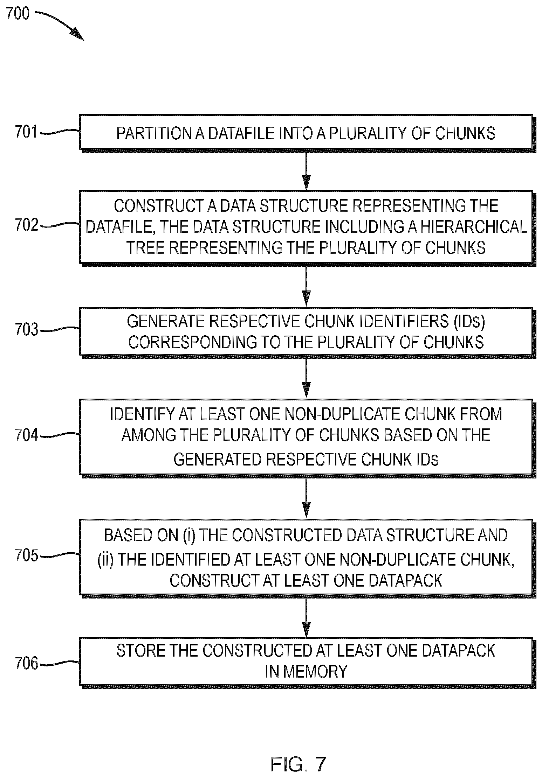

FIG. 7 is a flowchart of a method 700 for storing a datafile according to an embodiment. The method 700 is computer-implemented and may be implemented using any computing device, *e.g.,* a processor or combination of computing devices known to those of skill in the art.

The method 700 begins at step 701 by partitioning a datafile, *e.g.,* 102a-102b (FIG. 1), 202a-202b (FIG. 2), 302a-302b (FIG. 3), 402 (FIG. 4), 502 (FIG. 5), or 602a-602b (FIG. 6), into chunks, *e.g.,* 104a1-104a3 (FIG. 1), 204a1-204a3 or 204b (FIG. 2), 304a1-304a3 or 304b1-304b3 (FIG. 3), 404a-404n (FIG. 4), 504 (FIG. 5), or 604a-604c (FIG. 6). At step 702, the method 700 constructs a data structure representing the datafile. The data structure includes a hierarchical tree, *e.g*., 206a-206b (FIG. 2), 306a-306b (FIG. 3), 406 (FIG. 4), 506 (FIG. 5), or 606a-606b (FIG. 6), representing the chunks. In turn, at step 703, the method 700 generates respective chunk identifiers (IDs) corresponding to the chunks. At step 704, the method 700 identifies non-duplicate chunk(s), *e.g*., 304a1-304a3 or 304b1-304b3 (FIG. 3) or 604a-604c (FIG. 6), from among the chunks based on the generated respective chunk IDs. Next, at step 705, based on the constructed data structure and the identified non-duplicate chunk(s), the method constructs datapack(s), *e.g*., 414a-414b (FIG. 4), 514 (FIG. 5), or 614 (FIG. 6). At step 706, the method 700 then stores the constructed datapack(s) in memory.

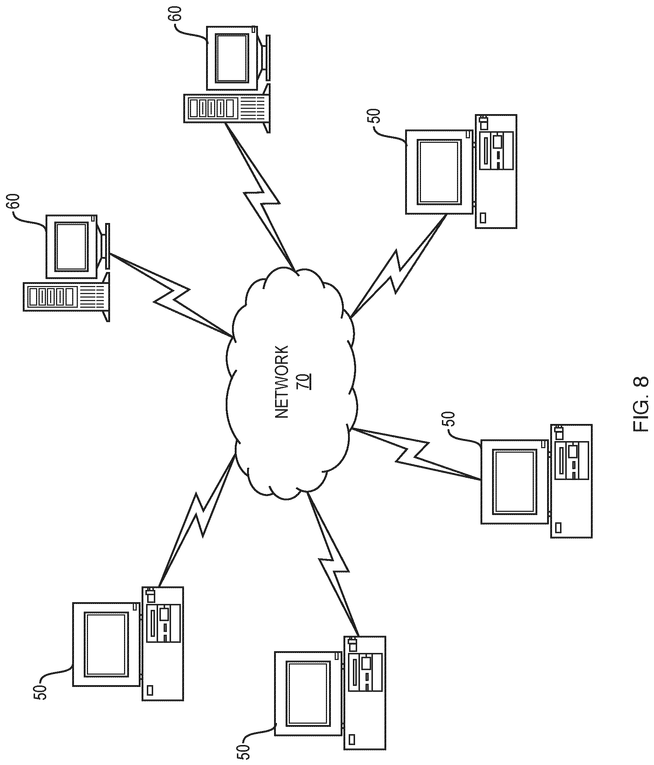

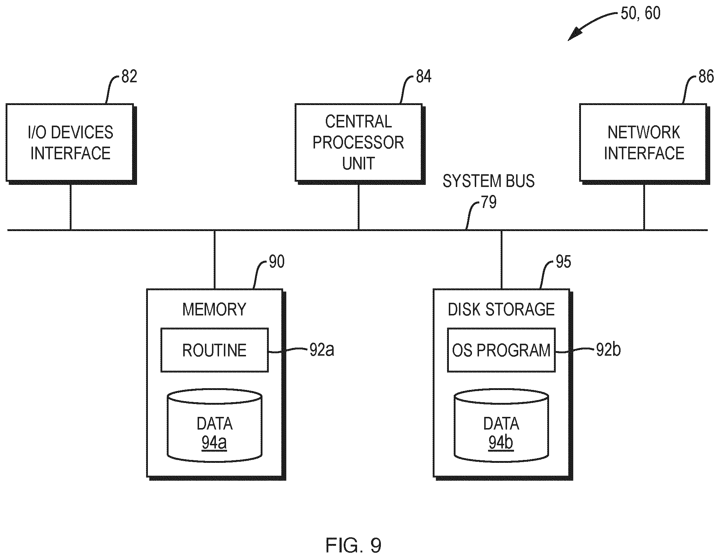

As noted, the method 700 is computer-implemented and, as such, the functionality and effective operations, *e*.*g*., the partitioning (701), constructing (702 and 705), generating (703), identifying (704), and storing (706), are automatically implemented by one or more digital processors. Moreover, the method 700 can be implemented using any computer device or combination of computing devices known in the art. Among other examples, the method 700 can be implemented using computer(s)/device(s) 50 and/or 60 described hereinbelow in relation to FIGs. 8 and 9.

In an embodiment of the method 700, constructing (702) the data structure includes generating nodes, *e*.*g*., 208a1-208a6 or 208b (FIG. 2), 308a1-308a2 or 308b1-308b2 (FIG. 3), 408a-408f (FIG. 4), 508a-508b (FIG. 5), or 608 (FIG. 6), representing the chunks and generating the hierarchical tree by iteratively partitioning the generated nodes until a condition is met. According to one such embodiment of the method 700, the iteratively partitioning is based on a criterion. In another embodiment of the method 700, the condition includes a first number of nodes at a first level of the hierarchical tree not being less than a second number of nodes at a second level of the hierarchical tree. According to one such embodiment of the method 700, the first level is higher than the second level in a hierarchical order of the hierarchical tree. Further, in yet another embodiment of the method 700, the criterion is based on a target average number of child nodes for a given parent node of the plurality of nodes. According to an embodiment of the method 700, the criterion is based at least in part on a given node ID for a given node of the nodes. In one such embodiment of the method 700, the given node ID is calculated based upon chunk ID(s) associated with the given node. According to another embodiment of the method 700, at least one of the condition and the criterion is based on user input.

According to an embodiment of the method 700, the datafile is a first datafile, *e.g.,* 302a (FIG. 3) or 602a (FIG. 6), and the hierarchical tree is a first hierarchical tree, *e.g.,* 306a (FIG. 3) or 606a (FIG. 6). In one such embodiment of the method 700, identifying the non-duplicate chunk(s) includes comparing the first hierarchical tree with a second hierarchical tree, *e.g.,* 306b (FIG. 3) or 606b (FIG. 6), associated with a second datafile, *e.g.,* 302b (FIG. 3) or 602b (FIG. 6).

In another embodiment of the method 700, partitioning (701) the datafile into the chunks includes partitioning the datafile into the chunks based on at least one of a Rabin-Karp function and a FastCDC function.

Further, in yet another embodiment of the method 700, partitioning (701) the datafile into the chunks includes partitioning the datafile into the chunks based on a target chunk size. According to an embodiment of the method 700, the target chunk size is based on user input.

According to an embodiment of the method 700, generating (703) the respective chunk IDs includes generating the respective chunk IDs using a SHA-256 function.

In another embodiment of the method 700, identifying (704) the non-duplicate chunk(s) includes querying a data repository index to identify unique chunk ID(s) corresponding to the non-duplicate chunk(s). Such an embodiment can search a data index using the plurality of generated chunk IDs to determine which of the plurality of generated chunk IDs are new (unique), *i.e.,* not already in the data index.

In yet another embodiment, the method 700 further includes generating a metadata segment, *e*.*g*., 416a-416b (FIG. 4) or 516 (FIG. 5), corresponding to a given datapack of the constructed datapack(s). According to one such embodiment of the method 700, the metadata segment includes information regarding content of the given datapack. In an embodiment, the method 700 further includes updating a data repository index based on the generated metadata segment.

According to an embodiment of the method 700, the memory in which the at least one datapack is stored (706) is associated with a cloud-based server, *e.g.,* 418 (FIG. 4), 518 (FIG. 5), or 618 (FIG. 6). In one such embodiment, the method 700 further includes, prior to the storing (706), transferring the constructed datapack(s) to the cloud-based server. In another embodiment of the method 700, the datafile is a newly-versioned file in a RCS and the cloud-based server includes a repository of the RCS. According to one such embodiment, the method 700 further includes performing the transferring as part of committing the newly-versioned file into the repository. In yet another embodiment, the method 700 further includes performing the transferring in parallel by instantiating at least two respective transfer threads corresponding to the constructed datapack(s). According to an embodiment, the method 700 further includes, responsive to detecting a failure of a respective transfer thread of the instantiated at least two transfer threads, restarting the respective transfer thread.

### Advantages

Embodiments provide significant reduction in an amount of storage required by a system, *e*.*g*., a RCS. Potentially, a RCS may store lots of duplicated data due to, for instance, storing multiple versions of each file. Conventional systems may try to reduce this duplication by storing deltas for each file version.

One novel approach of embodiments is to partition and store a file as chunks. Instead of just reducing duplicate data from one version of a file to the next, embodiments remove different types of duplicate data wherever they may occur. This may include, for instance, duplicate data within a file itself, duplicate data across multiple versions of a file *(e.g.,* no matter how far apart in a revision history), two different unrelated files, and even files across different revision control repositories, among other examples. The reduction in storage requirements achieved by embodiments can be quite significant, *e*.*g*., if data stored has lots of common sections, such as containing common IP (intellectual property) for instance. This advantage is completely unique to revision control using embodiments.

Advantageously, embodiments make reconstructing a file much simpler. Using embodiments, reconstructing a file may consist of just stitching together chunks that make up the file instead of, *e*.*g*., walking a delta tree or history and overlaying deltas to reconstruct the file. Embodiments' yet another novel approach is also faster when a number of versions of a file grows, as the approach is independent of the number of revisions of the file. Again, if versions of a file are stored as deltas, then a conventional system must walk a revision history back to gather all the deltas.

In addition, natural chunk partitioning of embodiments provides performance improvements when transferring a large file to a cloud server. Instead of transferring a full file sequentially, embodiments can transfer chunks (partitions of the file) in parallel. This fosters the ability to leverage multiple concurrent threads, even when transferring just a single file. Also, if a transfer fails, embodiments do not need to completely start over, but instead embodiments can just restart the transfer for partitions that failed.

Embodiments also offer advantages compared to existing approaches to data structures, *e*.*g*., Merkle trees where each node has only two children. For a chunk partition hierarchy tree according to an embodiment, each node may have more than just two children and the particular number of children may be based on natural partitioning of the child nodes. Moreover, for a chunk partition hierarchy tree of an embodiment, a number of children may be on average a specific target number, but may also be different for each parent node. Advantageously, this may result in more matching nodes between two trees when comparing an original file with a modified version of the same file, or when comparing completely different files but with duplicate content. With a chunk partition hierarchy tree of an embodiment, if the beginning of a file is modified, only the initial nodes change in the tree. However, in a similar circumstance when using existing approaches, for instance with a Merkle tree, all nodes in the tree may change due to a cascading effect. Embodiments avoid such negative effects, which is of particular benefit in a system such as a RCS.

### Computer Support

FIG. 8 is a schematic view of a computer network in which embodiments may be implemented.

Client computer(s)/devices 50 and server computer(s) 60 provide processing, storage, and input/output (I/O) devices executing application programs and the like. Client computer(s)/device(s) 50 can also be linked through communications network 70 to other computing devices, including other client device(s)/processor(s) 50 and server computer(s) 60. Communications network 70 can be part of a remote access network, a global network *(e.g.,* the Internet), cloud computing servers or service, a worldwide collection of computers, local area or wide area networks, and gateways that currently use respective protocols (e.g., TCP/IP, Bluetooth^{®}, etc.) to communicate with one another. Other electronic device/computer network architectures are suitable.

FIG. 9 is a block diagram illustrating an example embodiment of a computer node *(e.g.,* client processor(s)/device(s) 50 or server computer(s) 60) in the computer network of FIG. 8. Each computer node 50, 60 contains system bus 79, where a bus is a set of hardware lines used for data transfer among components of a computer or processing system. The bus 79 is essentially a shared conduit that connects different elements of a computer system (e.g., processor, disk storage, memory, I/O ports, network ports, etc.) that enables transfer of information between the elements. Attached to the system bus 79 is I/O device interface 82 for connecting various input and output devices (e.g., keyboard, mouse, display(s), printer(s), speaker(s), etc.) to the computer node 50, 60. Network interface 86 allows the computer node to connect to various other devices attached to a network (e.g., network 70 of FIG. 8). Memory 90 provides volatile storage for computer software instructions 92a and data 94a used to implement an embodiment of the present disclosure (e.g., the method 700 described hereinabove with respect to FIG. 7). Disk storage 95 provides non-volatile storage for the computer software instructions 92b and data 94b used to implement an embodiment of the present disclosure. Central processor unit 84 is also attached to the system bus 79 and provides for execution of computer instructions.

In one embodiment, the processor routines 92a-92b and data 94a-94b are a computer program product (generally referenced as 92), including a computer readable medium (e.g., a removable storage medium such as DVD-ROM(s), CD-ROM(s), diskette(s), tape(s), etc.) that provides at least a portion of the software instructions for the disclosure system. Computer program product 92 can be installed by any suitable software installation procedure, as is well known in the art. In another embodiment, at least a portion of the software instructions may also be downloaded over a cable, communication, and/or wireless connection. In other embodiments, the disclosure programs are a computer program propagated signal product embodied on a propagated signal on a propagation medium (e.g., a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternate embodiments, the propagated signal is an analog carrier wave or digital signal carried on the propagated medium. For example, the propagated signal may be a digitized signal propagated over a global network (e.g., the Internet), a telecommunications network, or other network (such as network 70 of FIG. 8). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of the computer program product 92 is a propagation medium that the computer system 50 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium, and the like.

In other embodiments, the program product 92 may be implemented as a so-called Software as a Service (SaaS), or other installation or communication supporting end-users.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

The teachings of all patents, published applications, and references cited herein are incorporated by reference in their entirety.

While example embodiments have been particularly shown and described, it will be understood by those skilled in the art that various changes in form and details may be made therein without departing from the scope of the embodiments encompassed by the appended claims.

## Claims

1. A computer-implemented method for storing a datafile, the computer-implemented method comprising:
partitioning a datafile into a plurality of chunks;
constructing a data structure representing the datafile, the data structure including a hierarchical tree representing the plurality of chunks;
generating respective chunk identifiers (IDs) corresponding to the plurality of chunks;
identifying at least one non-duplicate chunk from among the plurality of chunks based on the generated respective chunk IDs;
based on (i) the constructed data structure and (ii) the identified at least one non-duplicate chunk, constructing at least one datapack; and
storing the constructed at least one datapack in memory.

2. The computer-implemented method of Claim 1, wherein constructing the data structure includes:
generating a plurality of nodes representing the plurality of chunks; and
generating the hierarchical tree by iteratively partitioning the generated plurality of nodes until a condition is met, the iteratively partitioning being based on a criterion, optionally wherein the condition includes a first number of nodes at a first level of the hierarchical tree not being less than a second number of nodes at a second level of the hierarchical tree, the first level being higher than the second level in a hierarchical order of the hierarchical tree.

3. The computer-implemented method of Claim 2, wherein the criterion is based on a target average number of child nodes for a given parent node of the plurality of nodes.

4. The computer-implemented method of Claim 2, wherein the criterion is based at least in part on a given node ID for a given node of the plurality of nodes, the given node ID being calculated based upon one or more chunk IDs associated with the given node.

5. The computer-implemented method of Claim 2, wherein at least one of the condition and the criterion is based on user input.

6. The computer-implemented method of any one of Claims 1 to 5, wherein the datafile is a first datafile, wherein the hierarchical tree is a first hierarchical tree, and where identifying the at least one non-duplicate chunk includes:
comparing the first hierarchical tree with a second hierarchical tree associated with a second datafile.

7. The computer-implemented method of any one of Claims 1 to 6, wherein partitioning the datafile into the plurality of chunks includes:
partitioning the datafile into the plurality of chunks based on at least one of a Rabin-Karp function and a FastCDC function; or
partitioning the datafile into the plurality of chunks based on a target chunk size, optionally wherein the target chunk size is based on user input.

8. The computer-implemented method of any one of Claims 1 to 7, wherein generating the respective chunk IDs includes:
generating the respective chunk IDs using a SHA-256 function.

9. The computer-implemented method of any one of Claims 1 to 8, wherein identifying the at least one non-duplicate chunk includes:
querying a data repository index to identify at least one unique chunk ID corresponding to the at least one non-duplicate chunk.

10. The computer-implemented method of any one of Claims 1 to 9, further comprising:
generating a metadata segment corresponding to a given datapack of the constructed at least one datapack, the metadata segment including information regarding content of the given datapack, and optionally
updating a data repository index based on the generated metadata segment.

11. The computer-implemented method of any one of Claims 1 to 10, wherein the memory is associated with a cloud-based server and the computer-implemented method further comprises:
prior to the storing, transferring the constructed at least one datapack to the cloud-based server,
optionally wherein the datafile is a newly-versioned file in a revision control system (RCS) and the cloud-based server includes a repository of the RCS, and further comprising:
performing the transferring as part of committing the newly-versioned file into the repository.

12. The computer-implemented method of Claim 11, further comprising:
performing the transferring in parallel by instantiating at least two respective transfer threads corresponding to the constructed at least one datapack, and optionally
responsive to detecting a failure of a given transfer thread of the instantiated at least two transfer threads, restarting the given transfer thread.

13. A computer program comprising instructions which, when executed by a computer system, cause the computer to perform the method of any one of claims 1 to 12.

14. A computer-readable data storage medium having recorded thereon the computer program of claim 13.

15. A computer system comprising a processor coupled to a memory, the memory having recorded thereon the computer program of claim 13.
